(19) Europäisches Patentamt

European Patent Office

Office européen des brevets

(11) **EP 2 552 157 B1**

(12) **EUROPEAN PATENT SPECIFICATION**

(45) Date of publication and mention
of the grant of the patent:
**13.03.2019 Bulletin 2019/11**

(21) Application number: **10848262.1**

(22) Date of filing: **13.10.2010**

(51) Int Cl.:
*H04L 12/705* (2013.01)   *H04W 40/02* (2009.01)
*H04L 12/721* (2013.01)

(86) International application number:
**PCT/CN2010/077707**

(87) International publication number:
**WO 2011/116600 (29.09.2011 Gazette 2011/39)**

(54) **METHOD AND APPARATUS FOR LOOP PATH SEARCH IN MESH NETWORK**

VERFAHREN UND VORRICHTUNG FÜR SCHLEIFENWEGSUCHE IN EINEM MESH-NETZWERK

PROCÉDÉ ET APPAREIL POUR LA RECHERCHE DE CHEMINS EN BOUCLE DANS UN RÉSEAU MAILLÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2010 CN 201010140691**

(43) Date of publication of application:
**30.01.2013 Bulletin 2013/05**

(73) Proprietor: **ZTE Corporation**
**Shenzhen, Guangdong 518057 (CN)**

(72) Inventor: **YU, Lei**
**Shenzhen**
**Guangdong 518057 (CN)**

(74) Representative: **Schröer, Gernot H. et al**
**Meissner Bolte Patentanwälte**
**Rechtsanwälte Partnerschaft mbB**
**Bankgasse 3**
**90402 Nürnberg (DE)**

(56) References cited:
CN-A- 1 996 949      CN-A- 101 827 414
US-A1- 2005 063 321   US-A1- 2009 046 587
US-A1- 2009 161 536

• RAJ ET AL: "A survey of IP and multiprotocol label switching fast reroute schemes", COMPUTER NETWORKS, ELSEVIER SCIENCE PUBLISHERS B.V., AMSTERDAM, NL, vol. 51, no. 8, 23 March 2007 (2007-03-23) , pages 1882-1907, XP005936319, ISSN: 1389-1286

• JUNG HOON LEE ET AL: "A Real-Time Traffic Control Scheme of Multiple AGV Systems for Collision Free Minimum Time Motion: A Routing Table Approach", IEEE TRANSACTIONS ON SYSTEMS, MAN AND CYBERNETICS. PART A:SYSTEMS AND HUMANS, IEEE SERVICE CENTER, PISCATAWAY, NJ, US, vol. 28, no. 3, 1 May 1998 (1998-05-01), XP011056168, ISSN: 1083-4427

**Description**

Field of the Invention

The present invention relates to the field of network, in particular to a method and an apparatus for loop path search in a mesh network.

Background of the Invention

A loop path refers to one communication path P= [v1, v2, ..., vn, v1] (n≥3) in a mesh network G(V, E). In the path, other nodes are different from each other except a start node and a termination node. This path is also referred to as one loop path of the node v1.

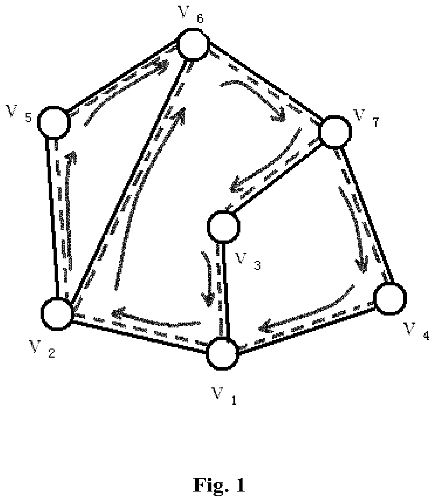

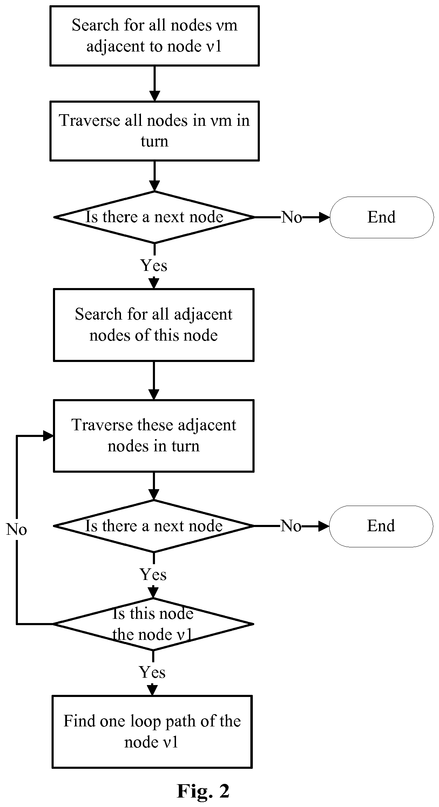

According to a conventional loop path calculation method, the path p= [v1, vm, vn, v1] is one loop path of the node v1. A recursive traversal mode is employed in the conventional loop path calculation method. The mesh network is shown in Fig. 1, and the flow chart of calculating the loop path of the node v1 is shown in Fig. 2 and described as follows.

Step 1: all nodes vm adjacent to the node v1 are searched out, wherein

$$vm = \{ v \ \square V \mid (v1, \ v) \ \square E \} .$$

Step 2: information about paths between the node v1 and the adjacent nodes is recorded; and all nodes vn adjacent to the nodes vm are searched out, wherein

$$vn = \{ v \ \square V \mid (vm, \ v) \ \square E \} .$$

Step 3: it is checked whether the node v1 is adjacent to the nodes vn, if so, one loop path p= [v1, vm, vn, v1] of the node v1 is found out; otherwise, Step 2 is repeated.

In the conventional loop path calculation method, in order to find out all loop paths of the node v1, the time complexity is more than or equal to O(Kn3) (n is the number of nodes in the mesh network), therefore, the conventional method has a problem of low loop path search efficiency.

US 2005/063321 A1 discloses a method and apparatus for designing a spanning tree virtual network.

Summary of the Invention

The present invention provides a method and an apparatus for loop path search in a mesh network, which solves the problem of low loop path search efficiency in the conventional method and improves the loop path search efficiency.

To solve the above problem, the technical solution of the present invention is realized as follows.

A method for loop path search in a mesh network is provided, and the method comprises:

searching for all nodes adjacent to a node v1 in the mesh network, and deleting all edges formed by the node v1 and nodes directly connected to the node v1 in the mesh network;

performing calculation for all the obtained nodes adjacent to the node v1 through a path algorithm to obtain all paths between all the nodes adjacent to the node v1; and

traversing all the paths, obtained through calculation, between all the nodes adjacent to the node v1, and adding the node v1 at a start and a termination of each path to finish a search for all loop paths of the node v1 in the Mesh network.

Preferably, a start node and a termination node of each of all the paths obtained through calculation are different and are nodes adjacent to the node v1.

Preferably, after the step of searching for all the nodes adjacent to the node v1 in the mesh network, the method further comprises: storing information about all the obtained nodes adjacent to the node v1;

after the step of obtaining all the paths through calculation, the method further comprises: storing information about all the obtained paths between all the nodes adjacent to the node v1;

after the step of finishing the search for all the loop paths of the node v1 in the mesh network, the method further comprises: storing information about the obtained loop paths of the node v1.

Preferably, a method for performing calculation for all the obtained nodes adjacent to the node v1 comprises:

performing calculation for all the obtained nodes adjacent to the node v1 through a K shortest path algorithm.

Preferably, all the loop paths comprise two parts:

one part is paths between nodes adjacent to the node v1; and the other part is paths between the node v1 and the nodes adjacent to the node v1.

An apparatus for loop path search in a mesh network is provided, and the apparatus comprises: a node search module, a calculation module and a loop path seeking module; wherein

the node search module is configured to search for all nodes adjacent to a node v1 in the mesh network, delete all edges formed by the node v1 and nodes directly connected to the node v1 in the mesh network, and send information about all the obtained nodes adjacent to the node v1 to the calculation module;

the calculation module is configured to perform calculation for all the obtained nodes adjacent to the node v1 through a path algorithm to obtain all paths between all the nodes adjacent to the node v1, and send all the obtained paths to the loop path seeking module; and the loop path seeking module is configured to traverse all the obtained paths between all the nodes adjacent to the node v1, and add the node v1 at a start and a termination of each path to finish a search for all loop paths of the node v1 in the Mesh network.

Preferably, a start node and a termination node of each of all the paths, which are obtained through calculation of the calculation module, between all the nodes adjacent to the node v1 are different and are nodes adjacent to the node v1.

Preferably, the apparatus further comprises: a storage module, configured to store the information about all the nodes, which are obtained by the node search module, adjacent to the node v1; further configured to store information about all the paths, which are obtained by the calculation module, between all the nodes adjacent to the node v1; and further configured to store information about the loop paths of the node v1 which are obtained by the loop path seeking module.

Preferably, the calculation module is configured to: when performing calculation for all the obtained nodes adjacent to the node v1, perform calculation for all the obtained nodes adjacent to the node v1 through a K shortest path algorithm.

Preferably, all the loop paths comprise two parts: one part is paths between nodes adjacent to the node v1; and the other part is paths between the node v1 and the nodes adjacent to the node v1.

Compared with the conventional art, by the application of the present invention, in aid of a K Shortest Path (KSP) algorithm, the loop paths are divided into two parts: one part is paths between adjacent nodes and the other part is paths from the adjacent nodes to the node v1, the time complexity according to the method in the present invention is the time complexity of the selected KSP algorithm, therefore the current problem of low loop path search efficiency in the conventional method is solved, the loop path search efficiency is improved, and the load of the system is reduced.

Brief Description of the Drawings

Fig. 1 is a diagram of a traversal process when loop paths of a node v1 are calculated in the conventional method;

Fig. 2 is a flow chart of calculating loop paths of a node v1 in the conventional method;

Fig. 3 is a flow chart of searching for loop paths of a node v1 in a mesh network in an embodiment of the present invention;

Fig. 4 is a structure diagram of an apparatus for loop path search in a mesh network in an embodiment of the present invention;

Fig. 5 is a diagram of a loop path;

Fig. 6 is a diagram of a mesh network in an embodiment of the present invention, based on which the embodiment is explained and described;

Fig. 7 is a diagram for describing calculation of paths between nodes adjacent to the node v1 in an embodiment of the present invention; and

Fig. 8 is a diagram of a traversal process when loop paths of the node v1 are calculated in an embodiment of the present invention.

Detailed Description of the Embodiments

The present invention will be further described below with reference to drawings and embodiments.

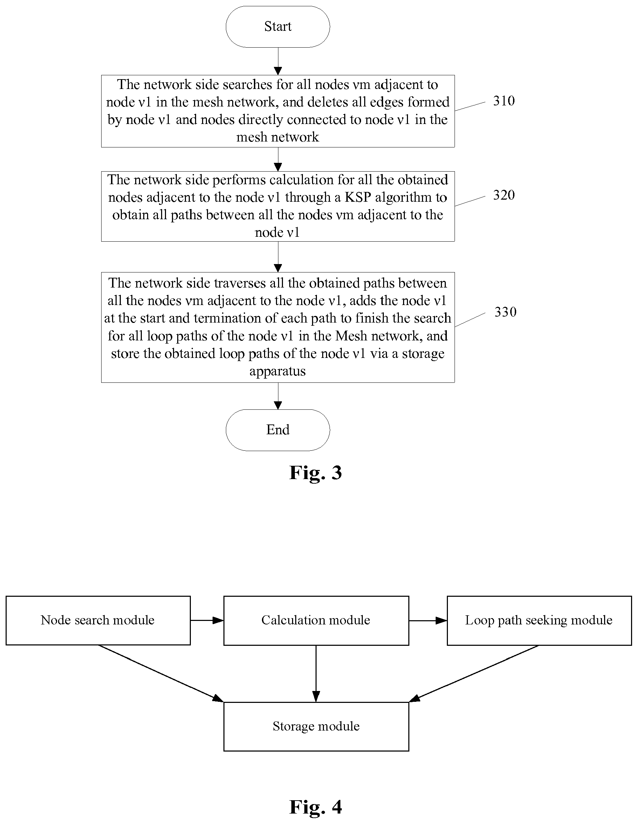

As shown in Fig. 3, in an embodiment of the present invention, the procedure of searching for loop paths of a node v1 in a mesh network G(V, E) comprises the following steps.

Step 310: A network side searches for all nodes vm adjacent to the node v1 in the mesh network, and deletes all edges formed by the node v1 and nodes directly connected to the node v1 in the mesh network; wherein

$$vm = \{v \in V \mid (v1, v) \in E\}.$$

After the network side finds out all the nodes vm adjacent to the node v1 in the mesh network, the method also comprises a step of storing information about all the obtained nodes adjacent to the node v1 via a storage apparatus.

Step 320: The network side performs calculation for all the obtained nodes adjacent to the node v1 through a K shortest path (KSP) algorithm to obtain all paths between all the nodes vm adjacent to the node v1.

After the network side obtains all the paths between all the nodes vm adjacent to the node v1, the method also comprises a step of storing information about all the obtained paths between all the nodes vm adjacent to the node v1 via a storage apparatus.

Wherein a start node and a termination node of each of the paths obtained by the network side are different and are nodes adjacent to the node v1.

Step 330: The network side traverses all the obtained paths between all the nodes vm adjacent to the node v1, adds the node v1 at the start and termination of each path to finish the search for all loop paths of the node v1 in the Mesh network, and stores the obtained loop paths of the node v1 via a storage apparatus.

As shown in Fig. 4, an apparatus for loop path search in a mesh network comprises a node search module, a calculation module and a loop path seeking module; wherein

the node search module is configured to search for all nodes adjacent to the node v1 in the mesh network, delete all edges formed by the node v1 and nodes directly connected to node v1 in the mesh network, and send information about all the obtained nodes adjacent to the node v1 to the calculation module;
the calculation module is configured to perform calculation for all the obtained nodes adjacent to the node v1 through a KSP algorithm to obtain all paths between all the nodes adjacent to the node v1, and send all the obtained paths to the loop path seeking module;
the loop path seeking module is configured to traverse all the obtained paths between all the nodes adjacent to the node v1, and add the node v1 at the start and termination of each path to finish the search for all loop paths of the node v1 in the Mesh network.

The start node and termination node of each of all the paths, which are obtained by the calculation module, between all nodes adjacent to the node v1 are different and are nodes adjacent to the node v1.

The storage module is configured to store the information about all the nodes, which are obtained by the node search module, adjacent to node v1; store information about all the paths, which are obtained by the calculation module, between all the nodes adjacent to the node v1; and store information about the loop paths, which are obtained by the loop path seeking module, of the node v1.

One loop path also may be understood as a path with the same start node and termination node. The method defines the loop path of the node vm, that is, in the path, vm serves as both the start node and the termination node of the path, which can be expressed as p= [vm, v1, ..., vn, vm] (n≥2).

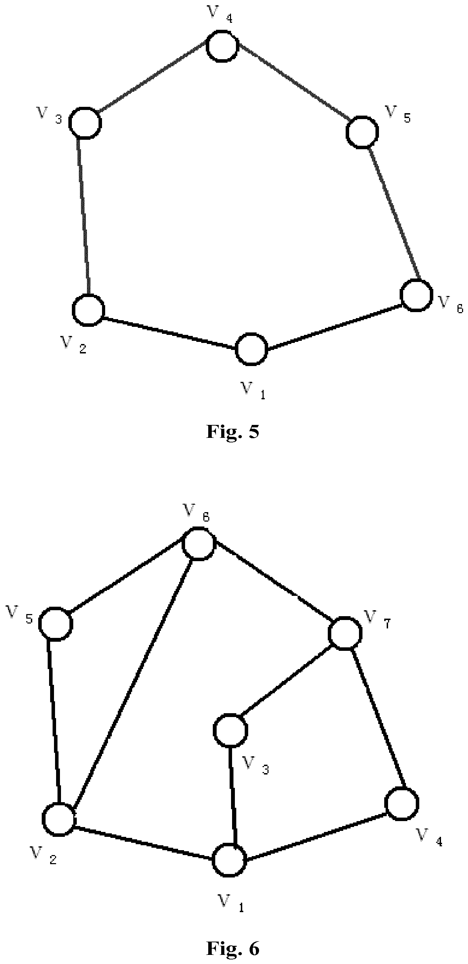

With reference to Fig. 5, one loop path of the node v1 is p= [v1, v2, v3, v4, v5, v6, v1]. This path can be understood to be formed by two parts, one part is the path pa= [v2, v3, v4, v5, v6] between adjacent nodes (v2, v6) of the node v1, and the other part is paths pb= [v1, v2] and pc= [v1, v6] between the node v1 and the adjacent nodes (v2, v6). So, the loop path to be obtained is the sum of the two parts of paths, that is, p= [v1, v2, v3, v4, v5, v6, v1]= pb+ pa+ pc. The above idea can be promoted to general situations, that is, searching for all the loop paths of a certain node vm in one mesh network G(V, E).

The specific implementation process will be described below with reference to drawings. As shown in Fig. 6, suppose that it is required to search for all the loop paths of the node v1 in Fig. 6.

First, nodes v2, v3 and v4 adjacent to the node v1 are obtained.

Then, paths between each two of the three nodes are calculated respectively, and KSP algorithm is recommended to calculate all the paths between two nodes.

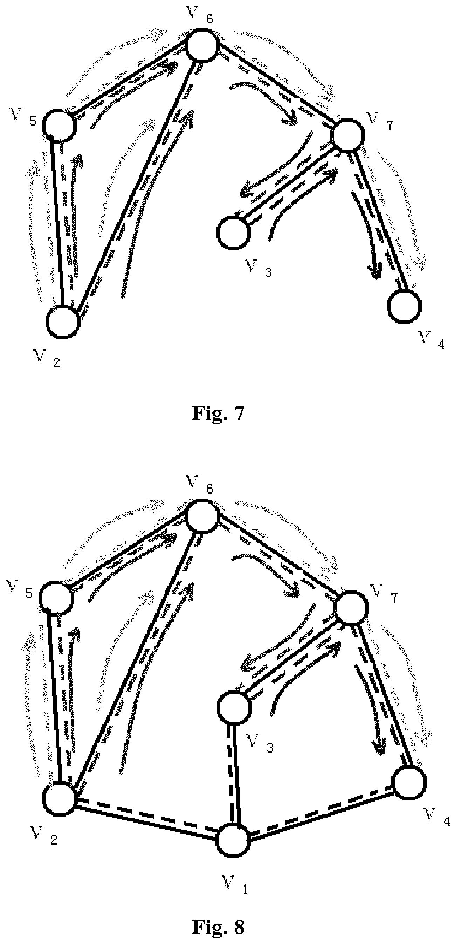

After the calculation is finished, the following paths can be obtained (see Fig. 7):

p123= [v2, v5, v6, v7, v3];
p223= [v2, v6, v7, v3];
p124= [v2, v5, v6, v7, v4];
p224= [v2, v6, v7, v4];
p134= [v3, v7, v4].

Paths between the node v1 and the adjacent nodes v2, v3 and v4 are known as follows:

p112= [v1, v2];
p113= [v1, v3];
p114= [v1, v4].

The two parts are added together to obtain all the loop paths of the node v1 (see Fig. 8):

p11= [v1, v2, v5, v6, v7, v3, v1];
p21= [v1, v2, v6, v7, v3, v1];
p31= [v1, v2, v5, v6, v7, v4, v1];
p41= [v1, v2, v6, v7, v4, v1];
p51= [v1, v3, v7, v4, v1];

the flow ends.

In accordance with the embodiments of the present invention, the problem of low loop path search efficiency existed in the conventional method is solved, and the loop path search efficiency is improved.

The above contents just describe preferable embodiments of the present invention, the protection scope of the present invention is not limited thereto, any changes or replacements easily made by person skilled in the art within the technical scope disclosed in the present invention should be included within the protection scope of the present invention. Therefore, the protection scope of the present invention should be subject to the protection scope defined by the claims.

**Claims**

1.  A method for loop path search in a mesh network, the method comprises:

    searching for all nodes adjacent to a node v1 in the mesh network, and deleting all edges formed by the node v1 and nodes directly connected to the node v1 in the mesh network (S310);
    performing calculation for all the obtained nodes adjacent to the node v1 through a path algorithm to obtain all paths between all the nodes adjacent to the node v1 (S320); and
    traversing all the paths, obtained through the calculation, between all the nodes adjacent to the node v1, and adding the node v1 at a start and a termination of each path to finish a search for all loop paths of the node v1 in the mesh network (S330).

**2.** The method according to claim 1, wherein a start node and a termination node of each of all the paths obtained through the calculation are different and are nodes adjacent to the node v1.

**3.** The method according to claim 2, wherein after the step of searching for all the nodes adjacent to the node v1 in the mesh network, the method further comprises: storing information about all the obtained nodes adjacent to the node v1;
after the step of obtaining all the paths through the calculation, the method further comprises: storing information about all the obtained paths between all the nodes adjacent to the node v1;
after the step of finishing the search for all the loop paths of the node v1 in the mesh network, the method further comprises: storing information about the obtained loop paths of the node v1.

**4.** The method according to any one of claims 1 to 3, wherein the step of performing calculation for all the obtained nodes adjacent to the node v1 comprises: performing calculation for all the obtained nodes adjacent to the node v1 through a K shortest path algorithm.

**5.** The method according to any one of claims 1 to 3, wherein all the loop paths comprise two parts: one part is paths between nodes adjacent to the node v1; and the other part is paths between the node v1 and the nodes adjacent to the node v1.

**6.** An apparatus for loop path search in a mesh network, the apparatus comprises: a node search module, a calculation module and a loop path seeking module; wherein
the node search module is configured to search for all nodes adjacent to a node v1 in the mesh network, delete all edges formed by the node v1 and nodes directly connected to the node v1 in the mesh network, and send information about all the obtained nodes adjacent to the node v1 to the calculation module;
the calculation module is configured to perform calculation for all the obtained nodes adjacent to the node v1 through a path algorithm to obtain all paths between all the nodes adjacent to the node v1, and send all the obtained paths to the loop path seeking module; and
the loop path seeking module is configured to traverse all the obtained paths between all the nodes adjacent to the node v1, and add the node v1 at a start and a termination of each path to finish a search for all loop paths of the node v1 in the mesh network.

**7.** The apparatus according to claim 6, wherein a start node and a termination node of each of all the paths, which are obtained through the calculation of the calculation module, between all the nodes adjacent to the node v1 are different and are nodes adjacent to the node v1.

**8.** The apparatus according to claim 7, further comprising: a storage module, configured to store the information about all the nodes, which are obtained by the node search module, adjacent to the node v1; further configured to store information about all the paths, which are obtained by the calculation module, between all the nodes adjacent to the node v1; and further configured to store information about the loop paths of the node v1 which are obtained by the loop path seeking module.

**9.** The apparatus according to any one of claims 6 to 8, wherein the calculation module is configured to: when performing calculation for all the obtained nodes adjacent to the node v1, perform calculation for all the obtained nodes adjacent to the node v1 through a K shortest path algorithm.

**10.** The apparatus according to any one of claims 6 to 8, wherein all the loop paths comprise two parts: one part is paths between nodes adjacent to the node v1; and the other part is paths between the node v1 and the nodes adjacent to the node v1.

**Patentansprüche**

**1.** Verfahren zur Schleifenwegsuche in einem vermaschten Netzwerk, das Verfahren umfassend:

Suchen nach allen Knoten, die im vermaschten Netzwerk neben einem Knoten v1 liegen, und Löschen aller Kanten, die vom Knoten v1 und Knoten gebildet werden, die im vermaschten Netzwerk direkt mit dem Knoten v1 verbunden sind (S310);
Durchführen von Berechnung für alle erhaltenen Knoten, die neben dem Knoten v1 liegen, über einen Weg-Algorithmus, um alle Wege zwischen allen Knoten zu erhalten, die neben dem Knoten v1 liegen, (S320); und
Durchlaufen aller Wege, die durch die Berechnung erhalten werden, zwischen allen Knoten, die neben dem Knoten v1 liegen, und Hinzufügen des Knoten v1 an einem Start und einem Ende von jedem Weg, um eine Suche nach allen Schleifenwegen des Knoten v1 im vermaschten Netzwerk zu beenden (S330).

**2.** Verfahren nach Anspruch 1, wobei ein Startknoten und ein Endknoten von jedem aller Wege, die durch die Berechnung erhalten werden, unterschiedlich sind und Knoten sind, die neben dem Knoten v1 liegen.

3. Verfahren nach Anspruch 2, wobei nach dem Schritt des Suchens nach allen Knoten, die im vermaschten Netzwerk neben dem Knoten v1 liegen, das Verfahren ferner umfasst: Speichern von Informationen über alle erhaltenen Knoten, die neben dem Knoten v1 liegen;
nach dem Schritt des Erhaltens aller Wege durch die Berechnung, das Verfahren ferner umfasst: Speichern von Informationen über alle erhaltenen Wege zwischen allen Knoten, die neben dem Knoten v1 liegen;
nach dem Schritt des Beendens des Suchens nach allen Schleifenwegen des Knoten v1 im vermaschten Netzwerk das Verfahren ferner umfasst: Speichern von Informationen über die erhaltenen Schleifenwege des Knotens v1.

4. Verfahren nach einem der Ansprüche 1 bis 3, wobei der Schritt des Durchführens von Berechnung für alle erhaltenen Knoten, die neben dem Knoten v1 liegen, umfasst:

Durchführen von Berechnung für alle erhaltenen Knoten, die neben dem Knoten v1 liegen, über einen K Kürzesten-Weg-Algorithmus.

5. Verfahren nach einem der Ansprüche 1 bis 3, wobei alle Schleifenwege zwei Teile umfassen:

ein Teil stellt Wege zwischen Knoten dar, die neben dem Knoten v1 liegen; und
der andere Teil stellt Wege zwischen dem Knoten v1 und den Knoten dar, die neben dem Knoten v1 liegen.

6. Gerät zur Schleifenwegsuche in einem vermaschten Netzwerk, die Vorrichtung umfassend: ein Knotensuchmodul, ein Berechnungsmodul und ein Schleifenwegsuchmodul; wobei
das Knotensuchmodul konfiguriert ist zum Suchen nach allen Knoten, die im vermaschten Netzwerk neben einem Knoten v1 liegen, Löschen aller Kanten, die vom Knoten v1 und Knoten gebildet werden, die im vermaschten Netzwerk direkt mit dem Knoten v1 verbunden sind, und Senden von Informationen über alle erhaltenen Knoten, die neben dem Knoten v1 liegen, an das Berechnungsmodul;
das Berechnungsmodul konfiguriert ist zum Durchführen von Berechnung für alle erhaltenen Knoten, die neben dem Knoten v1 liegen, über einen Weg-Algorithmus, um alle Wege zwischen allen Knoten zu erhalten, die neben dem Knoten v1 liegen und Senden aller erhaltenen Wege an das Schleifenwegsuchmodul; und
das Schleifenwegsuchmodul konfiguriert ist zum Durchlaufen aller erhaltenen Wege zwischen allen Knoten, die neben dem Knoten v1 liegen, und Hinzufügen des Knoten v1 an einem Start und einem Ende von jedem Weg, um eine Suche nach allen Schleifenwegen des Knoten v1 im vermaschten Netzwerk zu beenden.

7. Gerät nach Anspruch 6, wobei
ein Startknoten und ein Endknoten von jedem aller Wege, die durch die Berechnung des Berechnungsmoduls erhalten werden, zwischen allen Knoten, die neben dem Knoten v1 liegen, unterschiedlich sind und Knoten sind, die neben dem Knoten v1 liegen.

8. Gerät nach Anspruch 7, ferner umfassend: ein Speichermodul, das zum Speichern der Informationen über alle Knoten, die vom Knotensuchmodul erhalten werden, neben dem Knoten v1 konfiguriert ist; ferner zum Speichern von Informationen über alle Wege, die vom Berechnungsmodul erhalten werden, zwischen allen Knoten, die neben dem Knoten v1 liegen, konfiguriert ist; und ferner zum Speichern von Informationen über die Schleifenwege des Knotens v1 konfiguriert ist, die vom Schleifenwegsuchmodul erhalten werden.

9. Gerät nach einem der Ansprüche 6 bis 8, wobei das Berechnungsmodul konfiguriert ist um: wenn Berechnung für alle erhaltenen Knoten, die neben dem Knoten v1 liegen, durchgeführt wird, Berechnung für alle erhaltenen Knoten, die neben dem Knoten v1 liegen, über einen K Kürzester-Weg-Algorithmus durchzuführen.

10. Gerät nach einem der Ansprüche 6 bis 8, wobei alle Schleifenwege zwei Teile umfassen: ein Teil stellt Wege zwischen Knoten dar, die neben dem Knoten v1 liegen; und der andere Teil stellt Wege zwischen dem Knoten v1 und den Knoten dar, die neben dem Knoten v1 liegen.

**Revendications**

1. Procédé de recherche de chemin en boucle dans un réseau maillé, le procédé comprenant:

rechercher tous les noeuds adjacents à un noeud v1 dans le réseau maillé, et supprimer toutes les arêtes formées par le noeud v1 et les noeuds directement connectés au noeud v1 dans le réseau maillé (S310);
réaliser un calcul pour tous les noeuds obtenus adjacents au noeud v1 par l'intermédiaire d'un algorithme de chemin pour obtenir tous les chemins entre tous les noeuds adjacents au noeud v1 (S320); et
traverser tous les chemins, obtenus par l'intermédiaire du calcul, entre tous les noeuds adjacents au noeud v1, et ajouter le noeud v1 à un début et une fin de chaque chemin pour terminer une recherche de tous les chemins en boucle du noeud v1 dans le réseau maillé (S330).

2. Procédé selon la revendication 1, dans lequel un noeud de début et un noeud de fin de chacun de tous les chemins obtenus par l'intermédiaire du calcul sont différents et sont des noeuds adjacents au noeud v1.

3. Procédé selon la revendication 2, dans lequel, après l'étape de recherche de tous les noeuds adjacents au noeud v1 dans le réseau maillé, le procédé comprend en outre: stocker des informations concernant tous les noeuds obtenus adjacents au noeud v1 ;
après l'étape d'obtention de tous les chemins par l'intermédiaire du calcul, le procédé comprend en outre: stocker des informations concernant tous les chemins obtenus entre tous les noeuds adjacents au noeud v1 ;
après l'étape de terminaison de la recherche de tous les chemins en boucle du noeud v1 dans le réseau maillé, le procédé comprend en outre: stocker des informations concernant les chemins en boucle obtenus du noeud v1.

4. Procédé selon l'une quelconque des revendications 1 à 3, dans lequel l'étape de réalisation d'un calcul pour tous les noeuds obtenus adjacents au noeud v1 comprend:

réaliser un calcul pour tous les noeuds obtenus adjacents au noeud v1 par l'intermédiaire d'un algorithme de chemin le plus court K.

5. Procédé selon l'une quelconque des revendications 1 à 3, dans lequel tous les chemins en boucle comprennent deux parties:

une partie correspond à des chemins entre des noeuds adjacents au noeud v1 ;
et l'autre partie correspond à des chemins entre le noeud v1 et les noeuds adjacents au noeud v1.

6. Appareil de recherche de chemin en boucle dans un réseau maillé, l'appareil comprenant: un module de recherche de noeud, un module de calcul et un module de recherche de chemin en boucle;
le module de recherche de noeud est configuré pour rechercher tous les noeuds adjacents à un noeud v1 dans le réseau maillé, supprimer toutes les arêtes formées par le noeud v1 et les noeuds directement connectés au noeud v1 dans le réseau maillé, et envoyer des informations concernant tous les noeuds obtenus adjacents au noeud v1 au module de calcul;
le module de calcul est configuré pour réaliser un calcul pour tous les noeuds obtenus adjacents au noeud v1 par l'intermédiaire d'un algorithme de chemin pour obtenir tous les chemins entre tous les noeuds adjacents au noeud v1, et envoyer tous les chemins obtenus au module de recherche de chemin en boucle; et
le module de recherche de chemin en boucle est configuré pour traverser tous les chemins obtenus entre tous les noeuds adjacents au noeud v1, et ajouter le noeud v1 à un début et une fin de chaque chemin pour terminer une recherche de tous les chemins en boucle du noeud v1 dans le réseau maillé.

7. Appareil selon la revendication 6, dans lequel un noeud de début et un noeud de fin de chacun de tous les chemins, qui sont obtenus par l'intermédiaire du calcul du module de calcul, entre tous les noeuds adjacents au noeud v1 sont différents et sont des noeuds adjacents au noeud v1.

8. Appareil selon la revendication 7, comprenant en outre: un module de stockage, configuré pour stocker les informations concernant tous les noeuds, qui sont obtenus par le module de recherche de noeud, adjacents au noeud v1; en outre configuré pour stocker des informations concernant tous les chemins, qui sont obtenus par le module de calcul, entre tous les noeuds adjacents au noeud v1; et en outre configuré pour stocker des informations concernant les chemins en boucle du noeud v1 qui sont obtenus par le module de recherche de chemin en boucle.

9. Appareil selon l'une quelconque des revendications 6 à 8, dans lequel le module de calcul est configuré pour: lors de la réalisation d'un calcul pour tous les noeuds obtenus adjacents au noeud v1, réaliser un calcul pour tous les noeuds obtenus adjacents au noeud v1 par l'intermédiaire d'un algorithme de chemin le plus court K.

10. Appareil selon l'une quelconque des revendications 6 à 8, dans lequel tous les chemins en boucle comprennent deux parties: une partie correspond à des chemins entre des noeuds adjacents au noeud v1; et l'autre partie correspond à des chemins entre le noeud v1 et les noeuds adjacents au noeud v1.

**Fig. 1**

```
┌─────────────────────────┐
│   Search for all nodes vm │
│     adjacent to node v1   │
└─────────────────────────┘
             │
             ▼
┌─────────────────────────┐
│  Traverse all nodes in vm in │
│           turn             │
└─────────────────────────┘
             │
             ▼
        ◇ Is there a next node ◇ ──No──▶ ( End )
             │
            Yes
             │
             ▼
┌─────────────────────────┐
│   Search for all adjacent │
│     nodes of this node    │
└─────────────────────────┘
             │
             ▼
┌─────────────────────────┐
│  Traverse these adjacent  │
│     nodes in turn         │
└─────────────────────────┘
             │
             ▼
        ◇ Is there a next node ◇ ──No──▶ ( End )
             │
            Yes
             │
             ▼
        ◇ Is this node the node v1 ◇
             │
            Yes
             │
             ▼
┌─────────────────────────┐
│  Find one loop path of the │
│        node v1            │
└─────────────────────────┘
```

No

**Fig. 2**

Start

The network side searches for all nodes vm adjacent to
node v1 in the mesh network, and deletes all edges formed
by node v1 and nodes directly connected to node v1 in the
mesh network — 310

The network side performs calculation for all the obtained
nodes adjacent to the node v1 through a KSP algorithm to
obtain all paths between all the nodes vm adjacent to the
node v1 — 320

The network side traverses all the obtained paths between
all the nodes vm adjacent to the node v1, adds the node v1
at the start and termination of each path to finish the search
for all loop paths of the node v1 in the Mesh network, and
store the obtained loop paths of the node v1 via a storage
apparatus — 330

End

**Fig. 3**

| Node search module | Calculation module | Loop path seeking module |

| Storage module |

**Fig. 4**

**Fig. 5**

**Fig. 6**

Fig. 7

Fig. 8

**REFERENCES CITED IN THE DESCRIPTION**

**Patent documents cited in the description**

- US 2005063321 A1